# EUROPEAN PATENT APPLICATION

(11) **EP 3 565 047 A1**
(43) Date of publication of application: **06.11.2019**
(21) Application number: 17885912.0
(22) Date of filing: 25.12.2017
(51) Int. Cl.: H01M 8/18, H01M 8/04, H01M 8/04276, H01M 8/04298

(54) **REDOX FLOW BATTERY SYSTEM AND METHOD FOR OPERATING SAME**

(30) Priority: 28.12.2016 JP 2016256319
(71) Applicant: Showa Denko K.K., Tokyo 105-8518 (JP)
(72) Inventor: TOMITA, Miyuki, Tokyo 105-8518 (JP)
(74) Representative: Strehl Schübel-Hopf & Partner
(86) International application number: PCT/JP2017/046418
(87) International publication number: WO 2018/123964

(57) **Abstract**

Provided are: a redox flow battery system in which self-discharge during cessation of operation is suppressed, operation can be easily resumed after cessation of operation, and electric power can be extracted or stored even when circulation of an electrolyte is ceased; and a method for operating the same. In the redox flow battery system: a battery cell 2 and electrolyte tanks 14 are disposed to be substantially horizontal to one another; outgoing pipes 15 are disposed so as to connect the bottom portion of the battery cell 2 with the bottom portions of the electrolyte tanks 14; return pipes 16 are disposed so as to connect the upper portion of the battery cell 2 with the upper portions of the electrolyte tanks 14; and electrolyte recovery routes 20 disposed so as to connect the outgoing pipes 15 to the upper portions of the electrolyte tanks 14. The redox flow battery system is further provided with second liquid feeding pumps 21 for recovering electrolytes through the electrolyte recovery routes 20, and second opening/closing means 22 provided to the electrolyte recovery routes 20.

## Description

### TECHNICAL FIELD

The present invention relates to a redox flow battery system and a method of operating the redox flow battery system.

### BACKGROUND ART

As an electric power storage battery, development of various batteries has been in progress, and examples thereof include an electrolyte circulation type battery, a so-called redox flow battery. In a redox flow battery system, a positive-electrode electrolyte and a negative-electrode electrolyte are supplied and circulated from a positive-electrode electrolyte tank and a negative-electrode electrolyte tank to a battery cell including a positive electrode, a negative electrode, and a membrane interposed between both the electrodes by using a pump, and charge/discharge is performed through an electric power converter (for example, an AC/DC converter or the like).

On the other hand, in the redox flow battery system, there is a case where an operation is suspended such as a case of performing maintenance. However, in a case where the electrolytes remain in the battery cell during suspension of the operation, self-discharge occurs in the battery cell, and a battery discharge capacity decreases in proportional to the self-discharge. In addition, when the electrolytes generate heat due to the self-discharge, members such as electrodes which constitute the battery cell deteriorate.

Here, Patent Document 1 discloses a redox flow battery system in which a recovery space portion for recovering the electrolytes in the battery cell is provided at a position lower than the battery cell, and the electrolytes in the battery cell are recovered to the recovery space portion due to self-weight during stoppage of the pump.
Patent Document 1: Japanese Patent No.2012-164530

### DISCLOSURE OF THE INVENTION

### Problems to be Solved by the Invention

However, in the redox flow battery system described in Patent Document 1, it is necessary to provide the recovery space portion for recovering the electrolytes on a downward side in comparison to the battery cell. Although also depending on specifications (output/capacity), since the redox flow battery system is a heavy object, the redox flow battery system is not installed on a pedestal, and the battery cell and the electrolyte tanks are approximately horizontally lined up on a ground surface or a floor in many cases. Accordingly, when the recovery space portion is provided on a downward side in comparison to the battery cell, it is necessary to prepare a space as the recovery space portion in the underground, and thus an apparatus scale increases. In addition, since the electrolytes in the battery cell are discharged to the recovery space portion on an outer side of a circulation system, there is a problem that when the operation is resumed, it is difficult to resume the operation instantly. In addition, there is no assumption on electric power taking-out during suspension of circulation of the electrolytes.

An object of the invention is to provide a redox flow battery system in which self-discharge during suspension of an operation is suppressed and operation resumption after suspension of the operation is easy, and is capable of extracting electric power or storing electric power during suspension of circulation of an electrolyte, and a method of the redox flow battery system.

### Means for Solving the Problems

The present inventors have found that by providing an electrolyte recovery route disposed to connect an outgoing pipe through which an electrolyte is fed from an electrolyte tank to a battery cell, and an upper portion of the electrolyte tank, it is possible to provide a redox flow battery system in which self-discharge during suspension of an operation is suppressed, and resumption of the operation after suspension of the operation becomes easy, and thus electric power can be extracted even during suspension of circulation of the electrolyte, and they have accomplished the invention. More specifically, the invention provides the following configurations.
(1) The invention is a redox flow battery system including: a battery cell; an electrolyte tank that stores an electrolyte; a circulation route including an outgoing pipe through which the electrolyte is fed from the electrolyte tank to the battery cell, and a return pipe through which the electrolyte is returned from the battery cell to the electrolyte tank; a first liquid feeding pump that circulates the electrolyte through the circulation route; and a first opening/closing means that is provided in the outgoing pipe. The battery cell and the electrolyte tank are approximately horizontally placed, the outgoing pipe is disposed to connect a bottom portion of the electrolyte tank and a bottom portion of the battery cell, the return pipe is disposed to connect an upper portion of the electrolyte tank and an upper portion of the battery cell, and the redox flow battery system further comprises an electrolyte recovery route disposed to connect the outgoing pipe and the upper portion of the electrolyte tank, a second liquid feeding pump configured to recover the electrolyte through the electrolyte recovery route, and a second opening/closing means provided in the electrolyte recovery route are additionally provided.
(2) In addition, the invention is the redox flow battery system according to (1), the redox flow battery system comprising a control means that controls the first liquid feeding pump, the second liquid feeding pump, the first opening/closing means, and the second opening/closing means to be switchable to any of a typical operation mode in which the electrolyte is circulated from the electrolyte tank to the battery cell through the circulation route, an operation suspension mode in which the electrolyte is recovered from the battery cell to the electrolyte tank through the electrolyte recovery route, and an instantaneous operation mode in which electric power is extracted or stored without circulating the electrolyte from the electrolyte tank.
(3) In addition, the invention is a method of operating the redox flow battery system according to (1). The method comprises performing any of an operation in a typical operation mode in which the electrolyte is circulated from the electrolyte tank to the battery cell, an operation in an operation suspension mode in which the electrolyte is recovered from the battery cell through the electrolyte recovery route, and an operation in an instantaneous operation mode in which electric power is extracted without circulating the electrolyte from the electrolyte tank by controlling the first liquid feeding pump, the second liquid feeding pump, the first opening/closing means, and the second opening/closing means.

### Effects of the Invention

According to the invention, it is possible to provide a redox flow battery system in which self-discharge during suspension of an operation is suppressed and operation resumption after suspension of the operation is easy, and is capable of extracting electric power during suspension of circulation of an electrolyte, and an operation method thereof.

### BRIEF DESCRIPTION OF THE DRAWINGS

Fig. 1 is a configuration diagram illustrating a typical operation mode of a redox flow battery system according to an embodiment.
Fig. 2 is a configuration diagram illustrating an operation suspension mode of the redox flow battery system according to this embodiment.
Fig. 3 is a configuration diagram illustrating an instantaneous operation mode of the redox flow battery system according to this embodiment.

### PREFERRED MODE FOR CARRYING OUT THE INVENTION

Hereinafter, an embodiment in which the invention is applied to a vanadium-based redox flow battery system using vanadium (V) ions in a positive-electrode active material and a negative-electrode active material will be described in detail with reference to the accompanying drawings. Note that, the invention is not limited to the following embodiment and various modifications can be made in a range not changing the gist of the invention.

### <Redox Flow Battery System>

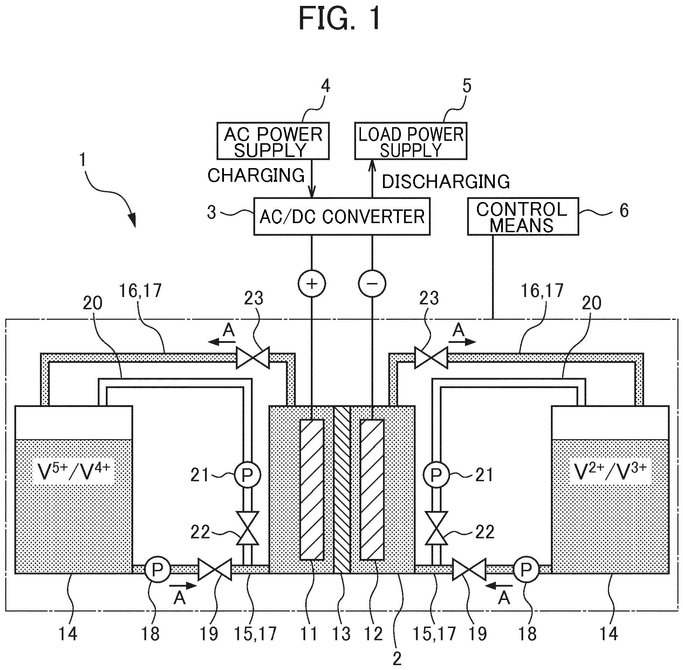

Fig. 1 is a configuration diagram illustrating an example of a configuration of a redox flow battery system according to this embodiment. A redox flow battery system 1 according to this embodiment uses the following battery cell 2 in a single type, or in a type called a battery cell stack in which a plurality of sheets of the battery cells 2 are stacked as a minimum unit, and performs charge/discharge by circulating an electrolyte containing vanadium as an active material to the battery cell 2. For example, the redox flow battery system 1 charges electric power from an AC power supply 4 such as an electric power station through an AC/DC converter 3, and discharges the charged electric power to a power supply for load 5 through the AC/DC converter 3.

As a main configuration, the redox flow battery system 1 includes the battery cell 2 including a positive electrode 11, a negative electrode 12, and a membrane 13 that is interposed between both the electrodes 11 and 12. In addition, the redox flow battery system 1 includes an electrolyte tank 14 that stores an electrolyte and a circulation route 17 including an outgoing pipe 15 through which the electrolyte is fed from the electrolyte tank 14 to the battery cell 2, and a return pipe 16 through which the electrolyte is returned from the battery cell 2 to the electrolyte tank 14, a first liquid feeding pump 18 that circulates the electrolyte through the circulation route 17, and a first opening/closing means 19 that is provided in the outgoing pipe 15. The first liquid feeding pump 18 and the first opening/closing means 19 are disposed in the outgoing pipe 15. To circulate the electrolyte through the circulation route 17, a liquid feeding pump may be disposed in the return pipe 16. However, in this case, power is necessary for pumping-up in the liquid feeding pump (suction-type pump) due to a pressure loss inside the battery cell 2. Accordingly, it is preferable that the first liquid feeding pump 18 be provided in the outgoing pipe 15.

Here, the battery cell 2 and the electrolyte tank 14 are approximately horizontally placed. As described in Patent Document 1, for example, in a case of specification of 170 kW/eight hours, the weight of one cell stack is 1500 kg or greater, and the amount of electrolyte stored in one electrolyte tank is approximately 20 m³. Accordingly, by installing the battery cell 2 and the electrolyte tank 14 on a ground surface or a floor, it is not necessary to provide a strong pedestal for supporting the battery cell 2, and thus there is a great advantage in terms of the cost or maintenance.

The outgoing pipe 15 is disposed to connect a bottom portion of the electrolyte tank 14 and a bottom portion of the battery cell 2, and the return pipe 16 is disposed to connect an upper portion of the battery cell 2 and the electrolyte tank 14. In Fig. 1, the return pipe 16 is formed on an upper portion of the electrolyte tank 14. An installation position of the return pipe 16 may be a bottom portion or a lateral portion of the electrolyte tank 14, but it is preferable to mount the return pipe 16, particularly, an upper portion. In addition, the redox flow battery system 1 includes an electrolyte recovery route 20 that is disposed to connect the outgoing pipe 15 and an upper portion of the electrolyte tank 14, a second liquid feeding pump 21 for recovering the electrolyte through the electrolyte recovery route 20, and a second opening/closing means 22 that is provided in the electrolyte recovery route 20. The second liquid feeding pump 21 is disposed in the electrolyte recovery route 20. In addition, the redox flow battery system 1 may include a third opening/closing means 23, which prevents reverse flow of the electrolyte in the return pipe 16, in the return pipe 16.

The first liquid feeding pump 18 and the second liquid feeding pump 21 are not particularly limited as long as it is possible to feed an electrolyte in a pipe, but it is preferable to use an electric pump. In addition, the first opening/closing means 19, the second opening/closing means 22, and the third opening/closing means 23 are not particularly limited as long as it is possible to open or close a route (pipe), but it is preferable to use a manual valve or an automatic valve.

According to this configuration, it is possible to perform a typical operation in which charge/discharge is performed by circulating the electrolyte to the battery cell 2 through the circulation route 17. In addition, during suspension of an operation, the electrolyte is recovered from the battery cell 2 to the electrolyte tank 14 through the electrolyte recovery route 20, it is possible to suppress self-discharge in the battery cell 2. As in the case of the typical operation, the electrolyte in the battery cell 2 is returned from an upper portion to the electrolyte tank 14, and the electrolyte is not discharged to an outer side of a circulation system. Accordingly, a circulation state of the electrolyte is approximately the same, and thus it is possible to resume the operation even after suspension of the operation. In addition, it is possible to perform an instantaneous operation in a state in which the electrolyte in the battery cell 2 is retained in the battery cell 2 without being returned to the electrolyte tank 14. For example, even in a case where it is necessary to suspend circulation of the electrolyte such as maintenance of the electrolyte tank, it is possible to extract electric power in a state in which circulation of the electrolyte from the electrolyte tank 14 is shut down.

Specifically, the redox flow battery system 1 having the above-described configuration has a typical operation mode in which the electrolyte is circulated from the electrolyte tank 14 to the battery cell 2 through the circulation route 17. In addition, the redox flow battery system 1 has an operation suspension mode in which circulation of the electrolyte is suspended, and the electrolyte is recovered from the battery cell 2 to the electrolyte tank 14 through the electrolyte recovery route 20. In addition, the redox flow battery system 1 has an instantaneous operation mode in which electric power is extracted while suspending circulation of the electrolyte. In addition, the redox flow battery system 1 includes a control means 6 that controls the first liquid feeding pump 18, the second liquid feeding pump 21, the first opening/closing means 19, and the second opening/closing means 22 to switch the typical operation mode, the operation suspension mode, and the instantaneous operation mode. The control means 6 is realized by a sequence circuit using a computer, a relay, or the like.

Hereinafter, the typical operation mode, the operation suspension mode, and the instantaneous operation mode will be described in detail.

### [Typical Operation Mode]

In the typical operation mode, As illustrated in Fig. 1, when the first opening/closing means 19 is opened, the second opening/closing means 22 is closed, and the first liquid feeding pump 18 is activated by the control means 6, and thus the electrolyte is circulated from the electrolyte tank 14 to the battery cell 2 through the circulation route 17. The control means 6 may perform control so that the first opening/closing means 19 is automatically opened when activating the first liquid feeding pump 18. By activating the first liquid feeding pump 18, the electrolyte in the electrolyte tank 14 is fed to the battery cell 2 through the outgoing pipe 15. The electrolyte fed to the battery cell 2 passes through the inside of the battery cell 2 from a downward side of the battery cell 2, is discharged to an upward side, and is returned to the electrolyte tank 14 through the return pipe 16. According to this, the electrolyte circulates in an arrow A direction in the drawing. At this time, since the second opening/closing means 22 is closed, and thus the electrolyte does not pass through the inside of the electrolyte recovery route 20. In Fig. 1 to Fig. 3, a halftone dot mesh portion represents the electrolyte. Note that, in the typical operation mode, the electrolyte may be circulated in a direction opposite to the arrow A direction, it is preferable to circulate the electrolyte in the arrow A direction when it is considered that the electrolyte is pumped up from the electrolyte tank 14.

According to this, in the typical operation mode, a charge/discharge reaction is performed in the battery cell 2, and electric power can be extracted. The charge/discharge reaction in the battery cell 2 is as follows.

### Positive-electrode cell

Charge: V⁴⁺ → V⁵⁺ + e⁻
Discharge: V⁵⁺ + e⁻ → V⁴⁺
Negative-electrode cell
Charge: V³⁺ + e⁻ → V²⁺
Discharge: V²⁺ → V³⁺ + e⁻

### [Operation Suspension Mode]

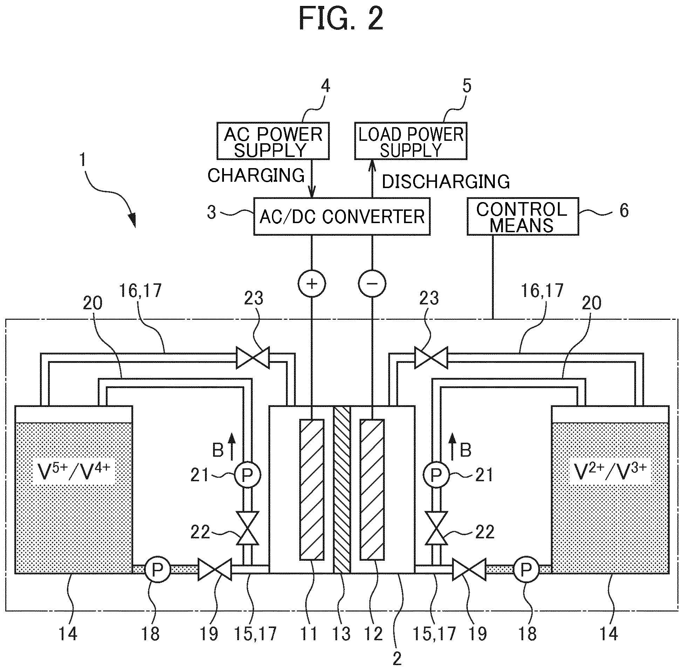

In the operation suspension mode, as illustrated in Fig. 2, when the first opening/closing means 19 is closed, the second opening/closing means 22 is opened, and the second liquid feeding pump 21 is activated by the control means 6, the electrolyte is recovered from the battery cell 2 to the electrolyte tank 14 through the electrolyte recovery route 20 as indicated by an arrow direction B in the drawing. The control means 6 may perform control so that the second opening/closing means 22 is automatically opened when activating the second liquid feeding pump 21. By activating the second liquid feeding pump 21, the electrolyte in the battery cell 2 is fed from a bottom portion of the battery cell 2 to an upper portion of the electrolyte tank 14 through a part of the outgoing pipe 15 and the electrolyte recovery route 20 that is connected to the outgoing pipe 15, and is recovered to the electrolyte tank 14. Since the electrolyte is charged from the outgoing pipe 15 connected to the bottom portion of the battery cell 2, it is possible to completely discharge and recover the electrolyte from the inside of the battery cell 2. The discharged electrolyte is returned from the upper portion to the electrolyte tank 14 through the electrolyte recovery route 20 as in the electrolyte that circulates in the typical operation mode, and thus it is possible to easily resume the typical operation even after the operation suspension mode.

As described above, in the operation suspension mode, it is possible to recover the electrolyte in the battery cell 2 to the electrolyte tank 14, and thus it is possible to suppress a decrease in a battery discharge capacity due to self-discharge, and deterioration of the electrodes, the membrane, and the like. In addition, the electrolyte is not discharged to an outer side of the circulation system, and thus an operation can be resumed as is even after the operation suspension mode.

Note that, the electrolyte in the battery cell 2 may be recovered to a certain amount capable of suppressing self-discharge, and it is not necessary to completely recover the electrolyte. However, it is preferable to completely recover the electrolyte that remains in the battery cell 2 from the battery cell 2 because self-discharge may progress with the passage of time. In addition, the third opening/closing means 23 may be provided in the return pipe 16 for circulation control of the electrolyte, and the third opening/closing means 23 may be closed in the operation suspension mode.

### [Instantaneous Operation Mode]

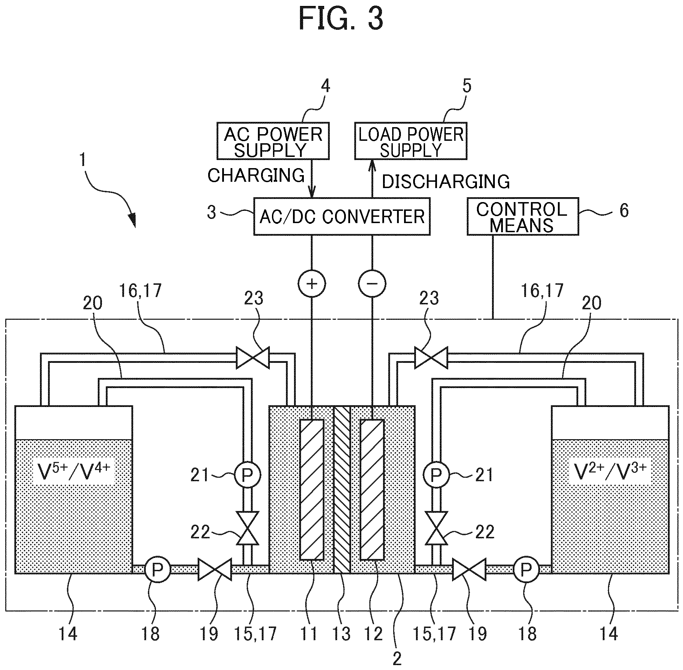

In the instantaneous operation mode, as illustrated in Fig. 3, when the first opening/closing means 19 and the second opening/closing means 22 are closed and the first liquid feeding pump 18 and the second liquid feeding pump 21 are not activated by the control means 6, circulation of the electrolyte is suspended. The electrolyte in the battery cell 2 is separated from the electrolyte tank 14, and remains in the battery cell 2.

In the instantaneous operation mode, it is difficult to extract total electric power by using a total amount of electrolyte as in the operation mode, but it is possible to extract a part of the electric power (an amount corresponding to the amount of an active material in the battery cell 2) in correspondence with necessity even during suspension of circulation of the electrolyte. Accordingly, even in a case where it is necessary to suspend circulation of the electrolyte such as maintenance of the electrolyte tank, it is possible to continuously extract electric power without suspending the system. In addition, when the operation is initiated, it is possible to further shorten a time taken until the operation is resumed in comparison to a case of switching from the operation suspension mode to the typical operation mode.

### [Switching of Operation Mode]

In the redox flow battery system 1 according to this embodiment, the typical operation mode, the operation suspension mode, and the instantaneous operation mode can be switched from each other by the control means 6. With regard to switching of the respective modes, switching may be automatically performed by the control means 6, or switching may be manually performed by the control means 6.

Even when the operation suspension mode is performed, the electrolyte is not discharged to an outer side of the circulation system, and the state of the electrolyte hardly varies. Accordingly, it is possible to perform an operation by freely switching the three modes like "typical operation mode-instantaneous operation mode-operation suspension mode" in correspondence with necessity of suspending circulation of the electric solution.

### <Operation Method of Redox Flow Battery System>

An operation method of a redox flow battery system according to this embodiment is an operation method of the redox flow battery system 1. That is, an operation in the typical operation mode in which the electrolyte is circulated from the electrolyte tank 14 to the battery cell 2, an operation in the operation suspension mode in which the electrolyte is recovered from the battery cell 2 through the electrolyte recovery route 20, and an operation in the instantaneous operation mode in which electric power is extracted without circulating the electrolyte from the electrolyte tank 14 are performed by controlling the first liquid feeding pump 18, the first opening/closing means 19, the second liquid feeding pump 21, and the second opening/closing means 22.

According to the operation method of the redox flow battery system 1 according to this embodiment, as described above, self-discharge during suspension of the operation is suppressed and resumption of the operation after suspension of the operation becomes easy, and thus it is possible to extract electric power during suspension of circulation of the electrolyte.

Note that, in this embodiment, description has been given of the vanadium-based redox flow battery system 1 using vanadium (V) ions as the positive-electrode active material and the negative-electrode active material, and an operation method thereof, but it is not necessary to say that there is limitation thereto. The negative-electrode electrolyte and the positive-electrode electrolyte may be aqueous solution containing at least one or more electrochemical active species. Examples of the electrochemical active species include metal ions of manganese, titanium, chromium, bromine, iron, zinc, cerium, lead, and the like.

### EXPLANATION OF REFERENCE NUMERALS

- 1: REDOX FLOW BATTERY SYSTEM
- 2: BATTERY CELL
- 3: AC/DC CONVERTER
- 4: AC POWER SUPPLY
- 5: LOAD POWER SUPPLY
- 6: CONTROL MEANS
- 11: POSITIVE ELECTRODE
- 12: NEGATIVE ELECTRODE
- 13: MEMBRANE
- 14: ELECTROLYTE TANK
- 15: OUTGOING PIPE
- 16: RETURN PIPE
- 17: CIRCULATION ROUTE
- 18: FIRST LIQUID FEEDING PUMP
- 19: FIRST OPENING/CLOSING MEANS
- 20: ELECTROLYTE RECOVERY ROUTE
- 21: SECOND LIQUID FEEDING PUMP
- 22: SECOND OPENING/CLOSING MEANS
- 23: THIRD OPENING/CLOSING MEANS

## Claims

1. A redox flow battery system comprising:
a battery cell;
an electrolyte tank that stores an electrolyte;
a circulation route including an outgoing pipe through which the electrolyte is fed from the electrolyte tank to the battery cell, and a return pipe through which the electrolyte is returned from the battery cell to the electrolyte tank;
a first liquid feeding pump that circulates the electrolyte through the circulation route; and
a first opening/closing means that is provided in the outgoing pipe,
wherein the battery cell and the electrolyte tank are approximately horizontally placed,
the outgoing pipe is disposed to connect a bottom portion of the electrolyte tank and a bottom portion of the battery cell,
the return pipe is disposed to connect an upper portion of the battery cell and an upper portion of the electrolyte tank, and
the redox flow battery system further comprises an electrolyte recovery route disposed to connect the outgoing pipe and the upper portion of the electrolyte tank, a second liquid feeding pump configured to recover the electrolyte through the electrolyte recovery route, and a second opening/closing means provided in the electrolyte recovery route.

2. The redox flow battery system according to claim 1, further comprising:
a control means that controls the first liquid feeding pump, the second liquid feeding pump, the first opening/closing means, and the second opening/closing means to be switchable to any of a typical operation mode in which the electrolyte is circulated from the electrolyte tank to the battery cell through the circulation route, an operation suspension mode in which the electrolyte is recovered from the battery cell to the electrolyte tank through the electrolyte recovery route, and an instantaneous operation mode in which electric power is extracted or stored without circulating the electrolyte from the electrolyte tank.

3. A method of operating the redox flow battery system according to claim 1, comprising:
performing any of an operation in a typical operation mode in which the electrolyte is circulated from the electrolyte tank to the battery cell, an operation in an operation suspension mode in which the electrolyte is recovered from the battery cell through the electrolyte recovery route, and an operation in an instantaneous operation mode in which electric power is extracted without circulating the electrolyte from the electrolyte tank by controlling the first liquid feeding pump, the second liquid feeding pump, the first opening/closing means, and the second opening/closing means.
